# FASCICULE DE BREVET EUROPEEN

(11) **EP 1 562 874 B1**
(45) Date de publication et mention de la délivrance du brevet: **01.07.2015**
(21) Numéro de dépôt: 03786003.8
(22) Date de dépôt: 07.11.2003
(51) Int. Cl.: C04B 28/14, E04F 13/04

(54) **COMPOSITION POUR ENDUIT DE JOINTOIEMENT POUR ELEMENTS DE CONSTRUCTION ET PROCEDE DE REALISATION D UN OUVRAGE**
FUGENMÖRTELZUSAMMENSETZUNG FÜR BAUELEMENTE, UND VERFAHREN ZUR REALISIERUNG EINES BAUOBJEKTES
JOINT COATING COMPOSITION FOR CONSTRUCTION ELEMENTS AND METHOD FOR PRODUCING A STRUCTURE

(30) Priorité: 08.11.2002 FR 0214033
(43) Date de publication de la demande: 17.08.2005
(73) Titulaire: Siniat, 84915 Avignon Cedex 9 (FR)
(72) Inventeur: BONETTO, Christian, F-84300 Cavaillon (FR); DOMENECH, Marc, F-84210 La Roque Sur Pernes (FR); PETIT, Alain, F-84000 Avignon (FR)
(74) Mandataire: Van Steenlandt, Wim August Maria
(86) Numéro de dépôt international: PCT/FR2003/003333
(87) Numéro de publication internationale: WO 2004/043874

(56) Documents cités:
- EP-A- 0 496 682
- FR-A- 2 166 536
- FR-A- 2 818 635
- FR-A- 2 818 968
- GB-A- 2 228 931
- US-A- 3 303 147
- US-A- 5 277 712
- US-A- 5 779 786

## Description

La présente invention concerne une composition pour enduit de jointoiement pour des éléments de construction, en particulier des plaques de plâtre à parement en papier, ainsi qu'un procédé de réalisation d'un ouvrage tel qu'une cloison, un habillage mural ou un plafond.

Il est bien connu d'utiliser des panneaux de construction tels que des plaques de plâtre, pour réaliser des cloisons, des habillages d'éléments verticaux ou inclinés ou pour réaliser des plafonds suspendus ou non.

Ces plaques sont généralement constituées d'une âme essentiellement en plâtre, recouverte sur chacune de ses faces par une feuille servant la fois d'armature et de parement et qui peut être constituée de carton ou de fibres minérales.

La demande de brevet européen publiée sous le numéro 496 682 décrit un enduit pour le remplissage des joints formés par les bords latéraux et contigus de deux plaques de plâtre et la formation d'un joint sans bande. Cet enduit comprend, en pourcentages en poids calculés par rapport à la totalité des matières sèches :
- 5 % à 30 % de plâtre semi-hydrate ;
- 7 % à 25 % de polymère en suspension dans une phase aqueuse et/ou en poudre redispersable ;
- si nécessaire, d'autres additifs pour le réglage du temps de prise et/ou le réglage de la qualité de la pâte et/ou d'adhérence de l'enduit ; et
- au moins une charge inerte en une quantité complémentaire à 100 %.

L'exemple 15 de cette demande de brevet décrit en particulier une composition comprenant, en parties en poids :
- 194 parties de plâtre alpha ;
- 108 parties de copolymère d'acétate de vinyle et d'éthylène stabilisé à l'alcool polyvinylique à 55 % d'extrait sec ;
- 6,6 parties de copolymère d'acétate de vinyle et d'éthylène en poudre redispersable ;
- 0,67 partie d'éther de cellulose ;
- 669,3 parties de calcaire ;
- 2,25 parties d'alcool polyvinylique ;
- 0,027 partie de polyacrylamide ;
- 2,25 parties d'argile ;
- 0,045 partie de ciment Portland blanc ;
- 1,12 partie de gypse + amidon (50/50) ; et
- 0,125 partie de kératine dégradée par hydrolyse.

Le brevet américain n° 5 653 797 décrit une composition pour le remplissage des joints formés par les bords adjacents de panneaux formés de plaques, cette composition comprenant :
(a) du sulfate de calcium semi-hydrate ;
(b) de l'eau en quantité suffisante pour ajuster la viscosité de la composition ;
(c) un agent retardateur de prise comprenant une composition à base de polymère comprenant des monomères acide acrylique et acrylamide ; et
(d) un agent accélérateur de prise comprenant un sel métallique comprenant des cations acides.

Ce brevet mentionne l'utilisation possible d'un liant tel qu'un latex ou de l'alcool polyvinylique.

Dans le tableau II de la colonne 8 de ce brevet est décrite une composition comprenant :
- 20 à 30 % de sulfate de calcium semi-hydrate ;
- 1 à 4 % d'un liant de type latex ;
- 1 à 10 % de perlite ;
- 10 à 50 % de calcaire ;
- 0,5 à 4 % d'argile ;
- 0,1 à 1 % d'un épaississant ;
- 0,5 à 3 % de talc ;
- 1 à 4 % de mica ;
- 0,01 à 1 % du retardateur particulier décrit ci-dessus ;
- 0,01 à 2 % de l'accélérateur particulier décrit ci-dessus ;
- 0,01 à 1 % d'un conservateur ; et
- 20 à 30 % d'eau.

Cette composition présente cependant un retrait trop important lors de son durcissement.

La demande internationale publiée sous le numéro WO 99/48833 décrit une composition qui peut être utilisée pour le remplissage de joints entre plaques de plâtre adjacentes. Cette composition donne lieu à une prise hydraulique quand elle est mélangée avec une quantité effective d'un accélérateur de prise et elle comprend un matériau tel que du plâtre, un retardateur particulier à base d'un polymère ou copolymère sulfoné.

L'exemple 11 de cette demande décrit une composition pour le remplissage de joints ayant la formulation suivante (en % en poids) :
- 35,9 % de sulfate de calcium semi-hydrate ;
- 4,1 % de copolymère d'acétate de vinyle et d'éthylène à 50 % dans l'eau ;
- 7,1 % de perlite ;
- 0,3 % d'éther de cellulose ;
- 8,1 % de calcaire ;
- 2,6 % de wollastonite ;
- 2,6 % de kaolin;
- 0,1 % de chaux
- 1,0 % de retardateur ; et
- 38,3 % d'eau.

Cette composition présente elle aussi l'inconvénient majeur d'entraîner un retrait trop important.

Les enduits ou compositions qui viennent décrits présentent l'inconvénient de ne pas être satisfaisants, parce qu'ils ne présentent pas cumulativement les qualités suivantes :
- une bonne travaillabilité ;
- une couleur compatible avec celle des éléments de construction auxquels ils sont destinés ; et
- permettre l'obtention d'un joint ayant un retrait nul ou quasiment nul et de bonnes propriétés mécaniques (dureté, résistance à la traction, à la compression et aux chocs, légère déformabilité ou élasticité pour éviter les fissurations).

En outre, les compositions des documents précités US 5 653 797 et WO 99/48833 ont la particularité de contenir un retardateur puissant qui bloque l'hydratation du sulfate de calcium semi-hydrate. C'est donc l'utilisateur qui ajoute un accélérateur pour que celle-ci démarre. Ceci entraîne des difficultés lors de l'utilisation sur un chantier, car l'utilisateur risque de ne pas ajouter la dose correcte d'accélérateur.

De plus, ces compositions évoluent dans le temps. Suivant le temps écoulé depuis la préparation de la composition, la même quantité d'accélérateur ajouté au moment de la mise en oeuvre n'a pas les mêmes effets. Il s'ensuit une incertitude quant à la prise hydraulique, en ce sens qu'on ne peut pas savoir précisément quand cette prise aura lieu.

Par ailleurs, d'autres problèmes se posent lorsque l'élément de construction est une plaque de plâtre recouverte d'un parement en papier :
- il est nécessaire, d'une part, que l'enduit ait une bonne adhérence sur le parement en papier, et, d'autre part, que l'adhérence d'un papier peint sur le joint soit également bonne, mais non excessive, de manière à rendre possible un ou plusieurs détapissage(s) sans arracher ni dégrader l'enduit ; et
- l'enduit doit avoir une absorption de l'eau et/ou de la peinture la plus proche possible de celle du papier de parement, ceci afin d'éviter le recours à une couche de primaire avant l'application d'une tapisserie ou la mise en peinture.

L'invention vise donc une composition pour enduit sans bande, qui, après gâchage avec de l'eau, donne un enduit présentant les qualités et caractéristiques qui viennent d'être énumérées. Elle est basée sur la découverte que, pour qu'un enduit soit satisfaisant, il est nécessaire qu'il contienne du sulfate de calcium, un liant et un agent hydrofugeant et ce, dans des proportions bien délimitées.

Ainsi, l'invention a pour objet une composition pour enduit de jointoiement comprenant :
a) 50 à 60 % de sulfate de calcium semi-hydrate ;
b) 5 à 15 % d'un liant organique sous forme de poudre ; et
c) 0,05 à 0,2 % d'un hydrofugeant; l'hydrofugeant étant choisi parmi l'acide oléique, l'acide stéarique et leurs sels alcalins ou alcalino-terreux.

Une telle composition, après gâchage avec de l'eau, donne donc un enduit à prise hydraulique, qui peut être utilisé seul, c'est-à-dire qu'il est, à la fois, enduit de remplissage et enduit de finition, et qu'il permet la réalisation d'un joint sans recourir à l'utilisation d'une bande.

L'invention a également pour objet un procédé de réalisation d'un ouvrage, dans lequel :
- on juxtapose des éléments de construction ;
- on gâche la composition pour enduit selon l'invention avec de l'eau, de façon à obtenir un enduit ;
- on remplit l'espace entre les éléments de construction au moyen de l'enduit obtenu précédemment, sans utiliser de bande ; et
- on laisse l'enduit durcir.

Enfin, l'invention concerne un joint tel qu'obtenu par là mise en oeuvre de ce procédé.

D'autres caractéristiques et avantages de l'invention apparaîtront à la lecture de l'exposé qui suit.

### EXPOSE DETAILLE DE L'INVENTION

### Composition selon l'invention

La composition générale de l'invention a été donnée précédemment.

Selon un mode de réalisation préféré de l'invention, la composition comprend en outre :
d) de 1 à 10 % d'un agent allégeant.
Selon un mode de réalisation particulièrement avantageux de l'invention, la composition comprend :
a) 50 à 60 % de sulfate de calcium semi-hydrate ;
b) 5 à 10 % d'un liant organique ;
b) 0,07 à 0,15 % d'un hydrofugeant ; et
d) 3 à 7 % d'un agent allégeant.

Bien entendu, le complément à 100 % est constitué d'une ou plusieurs charges et éventuellement un ou plusieurs additifs choisis parmi les rétenteurs d'eau, les épaississants, les agents de travaillabilité, les colorants ou pigments, les retardateurs de prise et les accélérateurs de prise.

De préférence, on utilise un sulfate de calcium semi-hydrate qui est du type alpha. En effet, ceci permet de réduire la quantité d'eau nécessaire au gâchage de la composition.

Le liant organique a pour fonction d'assouplir le sulfate de calcium dans le joint et d'obtenir de bonnes propriétés mécaniques. Comme liant, on peut utiliser des copolymères d'esters vinyliques et de monomères éthyléniques tels que les éthylène/acétate de vinyle (EVA plastifiés ou non), éthylène/versatate de vinyle, acétate de vinyle/versatate de vinyle, des polyacryliques, des copolymères acétate de vinyle/acrylique, des copolymères styrène/acrylique, styrène/butadiène, des terpolymères acétate de vinyle/versatate de vinyle/acryliques, acétate de vinyle/versatate/maléate de vinyle, des terpolymères acryliques et leurs mélanges.

Les copolymères vinyliques peuvent être stabilisés à l'alcool polyvinylique.

Le liant organique est en outre de préférence utilisé sous la forme d'une poudre redispersable.

L'agent hydrofugeant est choisi parmi l'acide oléique, l'acide stéarique, l'oléate de sodium et le stéarate de sodium.

Comme agent allégeant convenant à l'invention, on peut citer la perlite, les microbilles de verre, les microsphères de polymères.

De préférence l'agent allégeant est de la perlite expansée et non hydrofugée.

On peut en outre utiliser au moins une charge, comme, par exemple, le calcaire, le carbonate de magnésium, le carbonate de calcium et de magnésium (Dolomie), l'hydroxyde de magnésium, la silice, le gypse naturel ou de synthèse, ou bien l'anhydrite naturelle ou de synthèse broyée. On utilise de préférence du calcaire.

La composition pour enduit selon l'invention peut également comprendre un ou plusieurs rétenteurs d'eau, que l'on peut choisir parmi les éthers de cellulose, en particulier, la méthyl-cellulose (MC), la carboxyméthyl-cellulose (CMC), l'hydroxy éthyl cellulose (HEC), l'éthyl hydroxy éthyl cellulose (EHEC), la méthyl hydroxy propyl cellulose (MHPC) et la méthyl hydroxy éthyl cellulose (MHEC).

Ces rétenteurs d'eau peuvent avoir une action viscosifiante et donc influer positivement sur la qualité de la pâte.

Eventuellement, les éthers de cellulose peuvent être substitués partiellement ou encore accompagnés de dérivés de polycarbohydrates d'origine naturelle participant à la rhéologie de la pâte tels que les galactomananes, les polysaccharides, le xanthane, les dérivés du guar, etc. Les éthers de cellulose dits "modifiés" disponibles dans le commerce sont souvent des molécules précitées avec d'autres agents mouillants ou épaississants : ils peuvent tout à fait convenir à l'invention. Cependant, on peut utiliser d'autres agents rétenteurs d'eau ou viscosifiants tels que les éthers d'amidon ou des agents qui, en plus de leur fonction principale, présentent une action rétentrice d'eau suffisante, tels que l'alcool polyvinylique.

La composition pour enduit selon l'invention peut en outre comprendre un ou plusieurs épaississants qui peuvent être des polyacrylamides, de la CMC, des dérivés d'amidon ou des argiles telles que l'attapulgite, la sépiolite, la montmorillonite et la bentonite.

De préférence, l'épaississant est un polyacrylamide.

La composition selon l'invention peut aussi comprendre un ou plusieurs agents de travaillabilité. Cet agent de travaillabilité peut être un fluidifiant, un agent mouillant ou un agent de glisse.

Comme agent fluidifiant convenant à l'invention, on peut citer les polymères sulfonés, de préférence des agents à base de mélamine formaldéhyde sulfonée.

Comme agent mouillant convenant à l'invention, on peut citer les sulfates d'alkyle tels que le laurylsulfate de sodium, les sulfonates d'alkylaryle ou les dérivés phosphatés.

Comme agent de glisse convenant à l'invention, on peut citer le talc, ou le mica. Ces derniers, grâce à leurs morphologies lamellaires, favorisent la glisse de la spatule lors du jointoiement et contribuent à la diminution du retrait.

La composition selon l'invention peut aussi contenir un ou plusieurs colorants que l'on peut choisir par exemple parmi le dioxyde de titane et les azurants optiques.

La composition selon l'invention peut également contenir des additifs pour le réglage du temps de prise qui sont des retardateurs de prise ou des accélérateurs de prise.

Généralement, on ajoute un couple d'agents, dont l'un est accélérateur et l'autre retardateur.

Parmi les accélérateurs de prise pouvant convenir à l'invention, on peut citer les sulfates. De préférence, on utilise le gypse sous la forme d'un mélange pulvérulent de gypse et d'amidon, le gypse conservant toujours le même pouvoir d'accélération de la prise du plâtre grâce à l'amidon qui le préserve du vieillissement. Ainsi on rend la prise de l'enduit insensible aux pollutions extérieures de gypse, notamment celles qui peuvent être présentes sous la forme de germes de prise dans l'auge du plâtrier ou de l'applicateur.

Parmi les agents retardateurs de prise, on peut citer les agents à la kératine dégradée par hydrolyse, les acides hydroxycarboxyliques tels que l'acide tartrique et l'acide citrique, les sels de ces acides et le monophosphate de calcium. Ces agents sont mis en oeuvre dans des proportions qui sont variables selon les proportions de plâtre semi-hydraté et d'accélérateur.

Avantageusement, les proportions d'accélérateur et de retardateur sont ajustées de telle sorte que le temps de durcissement soit suffisamment court pour permettre l'achèvement du joint dans la journée.

Divers autres additifs peuvent éventuellement être introduits dans la composition selon l'invention. Ainsi, on peut ajouter à la composition un agent capable de porter le pH du mélange à un pH basique. L'agent basique facilite la mise en solution de l'agent rétenteur d'eau, essentiellement quand il s'agit d'éther de cellulose et par voie de conséquence, favorise la prise de viscosité. Comme agent basique, on utilise un agent minéral, de préférence du ciment Portland "blanc", c'est-à-dire dépourvu d'oxyde de fer, ou de la chaux.

De préférence encore, on introduit dans le mélange la quantité d'agent basique nécessaire pour atteindre un pH supérieur ou égal à 8.

### Préparation de la composition selon l'invention

La composition pour enduit selon l'invention est préparée par mélange de ses constituants dans n'importe quel ordre, de préférence jusqu'à l'obtention d'une poudre homogène.

Bien que les constituants de la composition selon l'invention ne se trouvent pas nécessairement tous sous une forme poudreuse, une fois qu'ils sont mélangés, la composition selon l'invention se présente généralement et globalement sous la forme d'une poudre.

En général, les particules constituant la poudre ont un diamètre au plus égal à 200 microns.

### Procédé de réalisation d'un ouvrage selon l'invention

Selon l'invention, pour réaliser un ouvrage on juxtapose des panneaux ou éléments de construction, on gâche la composition pour enduit selon l'invention avec de l'eau, de façon à obtenir un enduit, puis on remplit l'espace entre les éléments de construction au moyen de l'enduit obtenu, sans utiliser de bande, et on laisse l'enduit durcir.

Le gâchage est en général réalisé avec un rapport massique entre l'eau et la composition pour enduit allant de 40 à 50 %.

Le procédé selon l'invention s'applique en particulier à la réalisation d'un ouvrage au moyen de plaques de plâtre revêtues d'un parement en papier.

Ces plaques de plâtre peuvent présenter des bords de géométrie variées et en particulier, amincis, arrondis ou à la fois arrondis et amincis.

### Joint selon l'invention

La mise en oeuvre du procédé selon l'invention permet donc d'obtenir un joint satisfaisant.

Un tel joint a en outre l'avantage de permettre une mise en peinture qui convient à toutes les techniques de mise en peinture utilisées par l'homme du métier, en particulier les mises en peinture au rouleau, au pinceau et par pulvérisation sans air.

### EXEMPLES

Les exemples suivants illustrent la présente invention sans toutefois en limiter la portée.

### Exemple 1

On a préparé une composition pour enduit E selon l'invention et 3 compositions pour enduit sous forme de poudre A, B et C, hors du cadre de l'invention, à titre comparatif.

Les formulations correspondantes sont données dans le tableau suivant, dans lequel les valeurs indiquées correspondent à des parties en poids :

| | | ENDUITS | | | |
|---|---|---|---|---|---|
| Composition | | E (inv.) | A (comp.) | B (comp.) | C (comp.) |
| Plâtre | semi-hydrate alpha | 500,0 | 500,0 | 500,0 | 500,0 |
| Liant organique | copolymère ⁽¹⁾ acétate de vinyle/éthylène | - | 40,0 | 40,0 | 40,0 |
| | copolymère ⁽²⁾ acétate de vinyle/versatate de vinyle | 60,0 | - | - | - |
| Hydrofugeant | silicone en poudre | - | - | 2,0 | - |
| | stéarate de sodium | 1,0 | - | - | 1,0 |
| | ciment blanc ⁽³⁾ | - | 100,0 | - | - |
| Agent allégeant | perlite ⁽⁴⁾ | 40,0 | 40, 0 | 40,0 | 40,0 |
| Rétenteurs d'eau | MHPC | 3,0 | 3,0 | 3,0 | 3,0 |
| Charge | calcaire | 370,9 | 291,9 | 389,9 | 390,9 |
| Agent de travaillabilité | talc | 20,0 | 20,0 | 20,0 | 20,0 |
| Additifs | épaississant, retardateur, accélérateur, colorant | q.s.p. 1000 | q.s.p. 1000 | q.s.p. 1000 | q.s.p. 1000 |

| | | | | | |
|---|---|---|---|---|---|
| (1) : stabilisé à l'alcool polyvinylique (2) : stabilisé à l'alcool polyvinylique (3) : ciment Porland blanc (4) : expansée non hydrofugée | | | | | |

### Exemple 2

On a préparé des enduits par ajout d'eau, à raison de 42 g d'eau pour 100 g de composition, aux compositions E, A, B, et C de l'Exemple 1. Les enduits ainsi obtenus ont ensuite été testés pour réaliser un joint entre deux plaques de plâtre à parement de papier.

La composition A n'a pas donné de résultats satisfaisants, notamment, parce que l'utilisation de ciment donne un pH élevé à la pâte, ce qui provoque une hydrolyse de la colle à papier peint à base d'amidon, et, en conséquence, le papier peint n'adhère pas.

La composition B permet une bonne mise en peinture du joint et une bonne adhésion du papier peint. Mais le gâchage de la composition est très difficile, probablement parce que le silicone se mouille très mal. Un tel gâchage ne peut donc être mis en oeuvre sur un chantier.

La composition C donne lieu à un bon gâchage. Cependant, lors de la mise en peinture, le joint absorbe trop et trop vite la peinture et l'adhérence du papier sur cet enduit est insuffisante, du fait de la trop grande porosité du joint qui absorbe trop la colle.

La composition E, qui satisfait à tous les critères de formulation de l'invention, se gâche normalement, permet un bon collage et le liant crée un film suffisamment épais pour l'application de la peinture ou le collage du papier peint. Le plâtre de type alpha utilité permet de diminuer la demande en eau, et par conséquent, le retrait au séchage. La perlite rend l'enduit facile à poncer et réduit également le retrait.

Cet enduit est donc satisfaisant à tous points de vue.

## Revendications

1. Composition pour enduit de jointoiement comprenant:
a) 50 à 60 % de sulfate de calcium semi-hydrate;
b) 5 à 15 % d'un liant organique sous forme de poudre ; et
c) 0,05 à 0,2 % d'un hydrofugeant ;
l'hydrofugeant étant choisi parmi l'acide oléique, l'acide stéanique et leurs sels alcalins ou alcalino-terreux.

2. Composition pour enduit selon la revendication 1, **caractérisée en ce qu'**elle comprend en outre : d) 1 à 10 % d'un agent allégeant.

3. Composition pour enduit selon la revendication 1, **caractérisé en ce qu'**elle comprend:
a) 50 à 60 % de sulfate de calcium semi-hydrate
b) 5 à 10 % d'un liant organique;
e) 0,07 à 0,15 % d'un hydrofugeant ; et
d) 3 à 7 % d'un agent allégeant.

4. Composition pour enduit selon l'une des revendications 1 à 3, **caractérisée en ce que** le sulfate de calcium semi- hydrate est du type alpha.

5. Composition pour enduit selon l'une des revendications 1 à 4, **caractérisée en ce que** le liant organique est choisi dans le groupe constitué par les copolymères d'esters vinyliques et de monomères éthyléniques, les polyacryliques, copolymières acétate de vinyle/acrylique, les copolymères styrène/acrylique, styrène/butadiène, les terpolymères acétate de vinyle/versatate de vinyle/acrylique, acétate de vinyle/versalate/maléate de vinyle, les terpolymères acryliques et leurs mélanges.

6. Composition pour enduit selon l'une des revendications 2 à 5, **caractérisée en ce que** allégeant est de la perlite, en particulier de la perlite expansée non hydrofugée.

7. Composition pour enduit selon l'une des revendications 1 à 6, **caractérisée en ce qu'**elle se présente sous la forme d'une poudre.

8. Composition pour enduit selon la revendication 7, **caractérisée en ce que** la poudre est composée de particules ayant un diamètre au plus égal à 200 microns.

9. Procèdé de réalisation d'un ouvrage, dans lequel :
- on juxtapose des éléments de construction ;
- on gâche la composition pour enduit selon l'une des revendications 1 à 8 avec de l'eau, de façon à obtenir un enduit;
- on remplit l'espace entre les éléments de construction au moyen de l'enduit obtenu précédemment, sans utiliser de bande ; et
- on laisse l'enduit durcir.

10. Procédé selon la revendication 9, caractérisé en ce les éléments de construction sont des plaques de plâtre revêtues d'un parement en papier.

11. Joint entre deux éléments de construction, obtenu par la mise en oeuvre du procédé selon la revendication 9 ou la revendication 10.

## Patentansprüche

1. Fugenputzzusammensetzung, umfassend:
a) 50 bis 60% Calciumsulfat-Halbhydrat;
b) 5 bis 15% eines organischen Bindemittels in Pulverform; und
c) 0,05 bis 0,2% eines Hydrophobierungsmittels; wobei das Hydrophobierungsmittel aus Ölsäure, Stearinsäure und Alkali- oder Erdalkalisalzen davon ausgewählt ist.

2. Putzzusammensetzung nach Anspruch 1, **dadurch gekennzeichnet, dass** sie außerdem d) 1 bis 10% Leichtzuschlag umfasst.

3. Putzzusammensetzung nach Anspruch 1, **dadurch gekennzeichnet, dass** sie
a) 50 bis 60% Calciumsulfat-Halbhydrat;
b) 5 bis 10% eines organischen Bindemittels;
c) 0,07 bis 0,15% eines Hydrophobierungsmittels; und
d) 3 bis 7% eines Leichtzuschlags
umfasst.

4. Putzzusammensetzung nach einem der Ansprüche 1 bis 3, **dadurch gekennzeichnet, dass** das Calciumsulfat-Halbhydrat vom alpha-Typ ist.

5. Putzzusammensetzung nach einem der Ansprüche 1 bis 4, **dadurch gekennzeichnet, dass** das organische Bindemittel aus der Gruppe bestehend aus Copolymeren von Vinylestern und ethylenischen Monomeren, Polyacrylharzen, Vinylacetat/Acryl-Copolymeren, Styrol/Acryl-Copolymeren, Styrol/Butadien-Copolymeren, Vinylacetat/Vinylversatat/Acryl-Terpolymeren, Vinylacetat/Vinylversatat/Vinylmaleat-Terpolymeren, Acryl-Terpolymer und Mischungen davon ausgewählt ist.

6. Putzzusammensetzung nach einem der Ansprüche 2 bis 5, **dadurch gekennzeichnet, dass** es sich bei dem Leichtzuschlag um Perlit, insbesondere nicht hydrophobierten expandierten Perlit, handelt.

7. Putzzusammensetzung nach einem der Ansprüche 1 bis 6, **dadurch gekennzeichnet, dass** sie in Form eines Pulvers vorliegt.

8. Putzzusammensetzung nach Anspruch 7, **dadurch gekennzeichnet, dass** das Pulver aus Teilchen mit einem Durchmesser von höchstens 200 Mikron besteht.

9. Verfahren zur Herstellung eines Werks, bei dem man:
- Bauelemente nebeneinander legt;
- die Putzzusammensetzung nach einem der Ansprüche 1 bis 8 mit Wasser anmacht, um einen Putz zu erhalten;
- den Raum zwischen den Bauelementen ohne Verwendung eines Bands mit dem oben erhaltenen Putz füllt; und
- den Putz erhärten lässt.

10. Verfahren nach Anspruch 9, **dadurch gekennzeichnet, dass** es sich bei den Bauelementen um mit einer Verkleidung aus Papier beschichtete Gipsplatten handelt.

11. Fuge zwischen zwei Bauelementen, erhalten durch Ausübung des Verfahrens nach Anspruch 9 oder Anspruch 10.

## Claims

1. Joint compound composition comprising:
a) 50 to 60% of calcium sulphate hemihydrate;
b) 5 to 15% of an organic binder in powder form; and
c) 0.05 to 0.2% of a water repellent;
the water repellent being chosen from oleic acid, stearic acid and their alkali metal or alkaline-earth metal salts.

2. Joint compound composition according to Claim 1, **characterized in that** it furthermore includes:
d) 1 to 10% of a lightening agent.

3. Joint compound composition according to Claim 1, **characterized in that** it comprises:
a) 50 to 60% of calcium sulphate hemihydrate;
b) 5 to 10% of an organic binder;
c) 0.07 to 0.15% of a water repellent; and
d) 3 to 7% of a lightening agent.

4. Joint compound composition according to one of Claims 1 to 3, **characterized in that** the calcium sulphate hemihydrate is of the alpha type.

5. Joint compound composition according to one of Claims 1 to 4, **characterized in that** the organic binder is chosen from the group formed by copolymers of vinyl esters and of ethylene monomers, polyacrylics, vinyl acetate/acrylic copolymers, styrene/acrylic and styrene/butadiene copolymers, vinyl acetate/vinyl versatate/acrylic and vinyl acetate/vinyl versatate/ vinyl maleate terpolymers, acrylic terpolymers and blends thereof.

6. Joint compound composition according to one of Claims 2 to 5, **characterized in that** the lightening agent is perlite, in particular non-water-repellent expanded perlite.

7. Joint compound composition according to one of Claims 1 to 6, **characterized in that** it is in the form of a powder.

8. Joint compound composition according to Claim 7, **characterized in that** the powder is composed of particles having a diameter of at most 200 microns.

9. Method of producing a structure, in which:
- building elements are juxtaposed;
- the joint compound composition according to one of Claims 1 to 8 is mixed with water so as to obtain a joint compound;
- the space between the building elements is filled by means of the joint compound obtained above, without using a tape; and
- the joint compound is left to harden.

10. Method according to Claim 9, **characterized in that** the building elements are plasterboards coated with a paper facing.

11. Joint between two building elements, obtained by implementing the method according to Claim 9 or Claim 10.
